# EUROPÄISCHE PATENTANMELDUNG

(11) **EP 1 707 875 A1**
(43) Veröffentlichungstag der Anmeldung: **04.10.2006**
(21) Anmeldenummer: 05005920.3
(22) Anmeldetag: 18.03.2005
(51) Int. Cl.: F23J 15/04, B01D 53/50, B01F 13/02

(54) **Rauchgasreinigungsvorrichtung mit verbesserter Oxidationseinrichtung im Waschflüssigkeitssumpf**

(71) Anmelder: Lurgi Lentjes AG, 40549 Düsseldorf (DE)
(72) Erfinder: Christian Moser, 45359Essen (DE); Michael Heinke, 59199 Bönen (DE)
(74) Vertreter: Stenger, Watzke & Ring

(57) **Zusammenfassung**

Rauchgasreinigungsvorrichtung mit einem Behälter, der einen Waschflüssigkeitssumpf mit einer Oxidationseinrichtung zum Einleiten von Sauerstoff aufweist, wobei die Sauerstoffeinleitung durch wenigstens einen Plattenbelüfter erfolgt.

## Beschreibung

Die vorliegende Erfindung betrifft eine Rauchgasreinigungsvorrichtung, insbesondere zur Reinigung von Rauchgas eines Kohlekraftwerks oder dergleichen.

Vorrichtungen zur Reinigung von Rauchgas sind bereits bekannt. Sie umfassen normalerweise einen Waschturm mit Waschflüssigkeitsdüsen, die häufig in mehreren Ebenen angeordnet sind, einen Waschflüssigkeitssumpf, in dem Waschflüssigkeit gesammelt wird, und einen Absorptionsbereich, der sich in einem zylindrischen Behälterabschnitt des Waschturms vom Waschflüssigkeitssumpf bis zur oberen Waschflüssigkeitsdüsenebene erstreckt. Rauchgas wird in einen unteren Abschnitt des Absorptionsbereiches in den Waschturm geleitet, strömt von dort im wesentlichen vertikal aufwärts und verläßt den Waschturm durch eine oberhalb der Waschflüssigkeitsdüsen vorgesehene Austrittsöffnung. Auf seinem Weg durch den Waschturm kommt das Rauchgas mit aus den Waschflüssigkeitsdüsen austretender Waschflüssigkeit in Kontakt und wird entschwefelt, was nachfolgend näher beschrieben ist. Eine derartige Reinigungsvorrichtung ist beispielsweise aus der DE-A-100 58 548 bekannt.

Die Waschflüssigkeit umfaßt neben Wasser vorzugsweise Erdalkalien, die mit den im Rauchgas vorhandenen Schwefeloxiden und mit dem im Waschturm erzeugten Schwefeloxiden reagieren. Es wird insbesondere Kalk in Form von Kalziumoxid, Kalziumhydroxid, Kalziumkarbonat oder dergleichen verwendet.

Die Erdalkalien reagieren mit den in dem Rauchgas vorhandenen Schwefeloxiden im wesentlichen zu Kalziumsulfat, das in der Wachflüssigkeit gebunden wird. Das Rauchgas wird auf diese Weise von den unerwünschten Schwefeloxiden gereinigt und tritt aus der Reinigungsvorrichtung aus. Die Waschflüssigkeit hingegen gelangt zusammen mit den in dieser schwebend gehaltenen Kalziumsulfatteilchen in den Waschflüssigkeitssumpf und wird dort gesammelt.

Kalziumsulfat weist ähnliche vorteilhafte Eigenschaft wie Naturgips auf. Somit handelt es sich hierbei um ein erwünschtes Nebenprodukt des Rauchgasreinigungsverfahrens, das aus der im Waschflüssigkeitssumpf gesammelten Waschflüssigkeit gewonnen wird. Die Kalziumsulfatteilchen werden zusammen mit der Waschflüssigkeit dem Waschflüssigkeitssumpf entnommen und dieser in einem sich anschließenden Verfahren entzogen. Das Kalziumsulfat kann dann zu verschiedenen Werkstoffen weiterverarbeitet werden, insbesondere zu Bauwerkstoffen.

Ein Problem bei der Gewinnung von Kalziumsulfat besteht darin, daß bei der Reaktion der Waschflüssigkeit mit dem Rauchgas nicht nur Kalziumsulfat, sondern auch unerwünschte Nebenprodukte wie beispielsweise Sulfite, insbesondere Kalziumsulfit entstehen, die das Kalziumsulfat verunreinigen und somit die Qualität des Nebenproduktes mindern.

Um den Anteil dieser unerwünschten Sulfite in der in dem Waschflüssigkeitssumpf vorhandenen Waschflüssigkeit zu verringern, wird in der US-A-4 539 184 vorgeschlagen, in zumindest einem Bereich des Waschflüssigkeitssumpfes Sauerstoff in Form von Luft oder dergleichen einzubringen, um dort vorhandene Kalziumsulfite zu Kalziumsulfat zu oxidieren.

Auch die CA-A-2 135 430 beschreibt eine Rauchgasreinigungsvorrichtung mit einer im Waschflüssigkeitssumpf vorgesehenen Oxidationseinrichtung in Form eines horizontal angeordneten Gitters bestehend aus Sauerstoffzuführleitungen mit entsprechenden Öffnungen, durch die Sauerstoff in die im Waschflüssigkeitssumpf gesammelte Waschflüssigkeit eingeleitet werden kann. Das horizontale Gitter ist derart in dem Waschflüssigkeitssumpf positioniert, daß dieser in zwei Bereiche unterteilt wird.

Es ist eine **Aufgabe** der vorliegenden Erfindung, den Oxidationsprozeß im Waschflüssigkeitssumpf zu verbessern.

Gemäß der vorliegenden Erfindung wird diese Aufgabe durch eine Rauchgasreinigungsvorrichtung nach Anspruch 1 und durch ein Verfahren zur Rauchgasreinigung nach Anspruch 7 **gelöst.**

Derzeit erhältliche Plattenbelüfter erzeugen sehr kleine Luftblasen (< 1 mm Durchmesser) in hoher Anzahl. Kleine Luftblasen haben den Vorteil, daß sie eine längere Aufenthaltszeit als große Luftblasen im Waschflüssigkeitssumpf haben, wodurch der Eintrag von Sauerstoff in die Waschflüssigkeit verbessert wird. Die Erhöhung der Blasenanzahl vergrößert die Grenzfläche zwischen den Sauerstoffblasen und der Waschflüssigkeit und somit den Sauerstoffaustausch durch Diffusion und/oder Lösung an eben dieser Grenzfläche. Schließlich erhöht die verlängerte Aufenthaltszeit den Blasenweg und damit die Kontaktzeit.

Somit kann der Sauerstoff in jeder der aus dem Plattenbelüfter austretenden Sauerstoffblase optimal an die Waschflüssigkeit abgegeben werden. Entsprechend wird der Wirkungsgrad der Sauerstoffeinbringung und somit der Wirkungsgrad der Oxidation optimiert.

Der Plattenbelüfter ist vorzugsweise im wesentlichen tellerförmig, besser noch quaderförmig ausgebildet. Die quaderförmige Geometrie hat gegenüber der tellerförmigen Ausbildung den Vorteil, daß sich die aus dem quaderförmigen Plattenbelüfter austretenden Sauerstoffblasen kaum zu einer Blasensäule verdichten, sondern daß sie vielmehr an einen senkrecht nach oben gerichteten Weg ohne ausgeprägte Neigung zur Koaleszenz nehmen. Auf diese Weise wird ein hoher Grenzflächenaustausch und eine entsprechende Optimierung der Oxidation erzielt.

Gemäß einer Ausführungsform der vorliegenden Erfindung umfaßt der Plattenbelüfter eine perforierte, vorzugsweise austauschbar an diesem angeordnete Membran, durch die die Sauerstoffblasen austreten. Die Perforation weist bevorzugt Schlitze auf, die beispielsweise mittels eines Lasers erzeugt werden können. Als besonders vorteilhaft hat sich eine EPDM-Membran herausgestellt.

Die Oxidationseinrichtung der Rauchgasreinigungsvorrichtung kann einen oder mehrere Plattenbelüfter umfassen. Sind mehrere Plattenbelüfter vorgesehen, so werden diese bevorzugt ring- oder strahlenförmig in dem Waschflüssigkeitssumpf angeordnet. Dabei können die Plattenbelüfter direkt an den entsprechenden Sauerstoffzuführleitungen befestigt werden. Die Zuordnung und endgültige Formgebung der einzelnen Sauerstoffzuführstränge ist im wesentlichen abhängig von der Behälterform, dem Sauerstoffbedarf und dem Volumen der Waschflüssigkeit, in das der Sauerstoff eingebracht werden soll. Grundsätzlich ist natürlich jede Anordnung der Plattenbelüfter denkbar.

Schließlich bezieht sich die vorliegende Erfindung auf ein entsprechendes Rauchgasreinigungsverfahren, bei dem in einem im Waschflüssigkeitssumpf stattfindenden Oxidationsprozeß die Sauerstoffzufuhr mittels wenigstens einem Plattenbelüfter erfolgt.

## Patentansprüche

1. Rauchgasreinigungsvorrichtung mit einem Behälter, der einen Waschflüssigkeitssumpf mit einer Oxidationseinrichtung zum Einleiten von Sauerstoff aufweist, wobei zur Sauerstoffeinleitung wenigstens ein Plattenbelüfter vorgesehen ist.

2. Rauchgasreinigungsvorrichtung nach Anspruch 1, wobei der Plattenbelüfter im wesentlichen tellerförmig ausgebildet ist.

3. Rauchgasreinigungsvorrichtung nach Anspruch 1, wobei der Plattenbelüfter im wesentlichen quaderförmig ausgebildet ist.

4. Rauchgasreinigungsvorrichtung nach einem der vorhergehenden Ansprüche, wobei der Plattenbelüfter eine perforierte Membran aufweist.

5. Rauchgasreinigungsvorrichtung nach Anspruch 4, bei dem die Membran austauschbar an dem Plattenbelüfter angeordnet ist.

6. Rauchgasreinigungsvorrichtung nach Anspruch 3, wobei die Perforation der Membran Schlitze umfaßt.

7. Rauchgasreinigungsvorrichtung nach Anspruch 3 oder 4, wobei es sich bei der Membran um eine EPDM-Membran handelt.

8. Rauchgasreinigungsvorrichtung nach einem der vorhergehenden Ansprüche, wobei mehrere Plattenbelüfter ring- oder strahlenförmig in dem Behälter angeordnet sind.

9. Verfahren zur Rauchgasreinigung, bei dem in einem im Waschflüssigkeitssumpf stattfindenden Oxidationsprozess wenigstens ein Plattenbelüfter zur Einbringung von Sauerstoff eingesetzt wird.
